# EUROPEAN PATENT APPLICATION

(11) **EP 4 346 117 A1**
(43) Date of publication of application: **03.04.2024**
(21) Application number: 22199218.3
(22) Date of filing: 30.09.2022
(51) Int. Cl.: H04B 7/155

(54) **CONTROL CONFIGURATION PRIORITY FOR NETWORK-CONTROLLED REPEATERS**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 540-6207 (JP); ZEINEDDINE, Khalid, 63225 Langen (DE)
(74) Representative: Grünecker Patent- und Rechtsanwälte PartG mbB

(57) **Abstract**

The present disclosure relates to a communication device, a scheduling device and respective methods for a communication device and a scheduling device. For example, the communication device comprises a transceiver and circuitry. The transceiver, in operation: (i) receives signals to be relayed and transmits the received signals, (ii) transmits or receives control signals, and (iii) receives relay configuration signalling. The circuitry, in operation, (i) obtains, from the relay configuration signalling, a plurality of relay configurations, wherein each relay configuration is to be applied to the signals, which are transmitted or received by the communication device, and (ii) determines, for a time interval, where two or more relay configurations overlap, to apply a relay configuration among the two or more overlapping relay configurations to the signals, which are transmitted or received by the communication device, wherein the circuitry, in operation, determines, for the time interval, to apply the relay configuration, which has a highest priority among the two or more overlapping relay configurations.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates increasing the efficiency of a communication system comprising a relay node. In particular, the present disclosure may increase the efficiency in a communication system, in which a relay supports (i) the simultaneous reception/transmission in different links, and (ii) a separate reception/transmission (i.e. at different times) in said different links.

In an embodiment, the techniques disclosed here feature an apparatus (e.g. communication device, in particular a relay apparatus).The apparatus comprises a transceiver and circuitry. The transceiver, in operation: (i) receives signals to be relayed and transmits the received signals, (ii) transmits or receives control signals, and (iii) receives relay configuration signalling. The circuitry, in operation, (i) obtains, from the relay configuration signalling, a plurality of relay configurations, wherein each relay configuration is to be applied to the signals, which are transmitted or received by the communication device, and (ii) determines, for a time interval, where two or more relay configurations overlap, to apply a relay configuration among the two or more overlapping relay configurations to the signals, which are transmitted or received by the communication device, wherein the circuitry, in operation, determines, for the time interval, to apply the relay configuration, which has a highest priority among the two or more overlapping relay configurations.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a block diagram illustrating the functional communication structure of a relay node in a communication system in which the node relays signals between a base station and a UE;
- **Fig. 7**: is a schematic drawing illustrating a possible collision in time between different relay configurations intended by the base station to be applied by the relay node for a transmission or reception of control signals and/or signals to be relayed;
- **Fig. 8**: is a block diagram of a communication system including a relay node and a base station with their respective exemplary functional structures;
- **Fig. 9**: is a block diagram illustrating an exemplary functional structure of the processing circuitry at the relay node side;
- **Fig. 10**: is a block diagram illustrating an exemplary functional structure of the processing circuitry at the base station side;
- **Fig. 11**: is a flow chart illustrating exemplary steps performed by a relay node;
- **Fig. 12**: is a flow chart illustrating exemplary steps performed by a base station;
- **Fig. 13**: is a schematic drawing illustrating exemplary behavior of a relay configured with two semi-static beam configurations having different priorities;
- **Fig. 14**: is a schematic drawing illustrating exemplary behavior of a relay configured with a semi-static beam configuration and a dynamically indicated beam configuration, having a different priority than the semi-static beam configuration;
- **Fig. 15**: is a schematic drawing illustrating exemplary behavior of a relay configured with semi-static and dynamically indicated beam configurations having different priority levels;
- **Fig. 16**: is a schematic drawing illustrating exemplary behavior of a relay configured with two dynamically indicated beam configurations having different priorities;
- **Fig. 17**: is a schematic drawing illustrating exemplary behavior of a relay configured with beam configurations being indicated by a same dynamic control information massage;
- **Fig. 18**: is a schematic drawing illustrating exemplary behavior of a relay configured with two beam configurations and capable of simultaneously applying two beam configurations.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

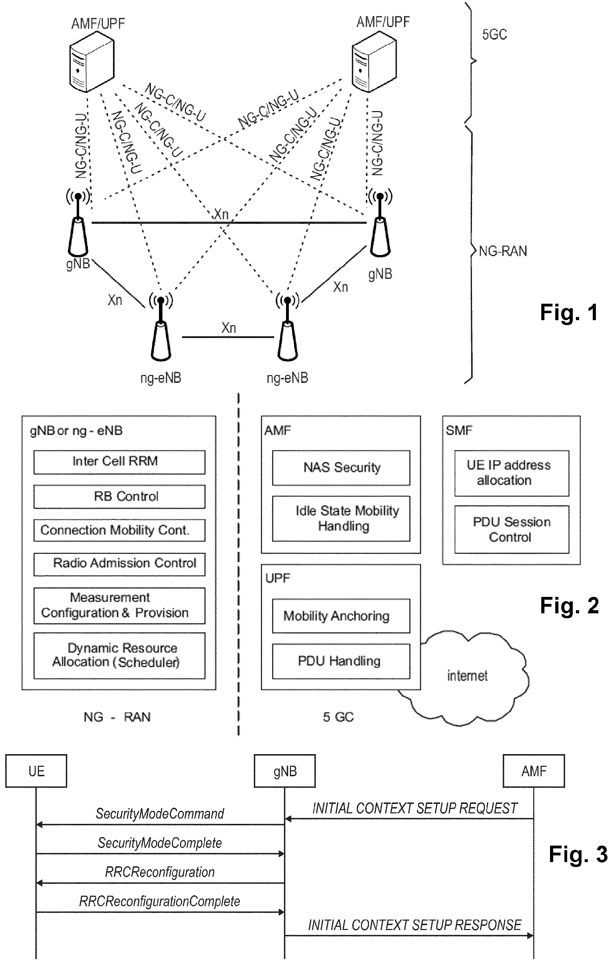

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

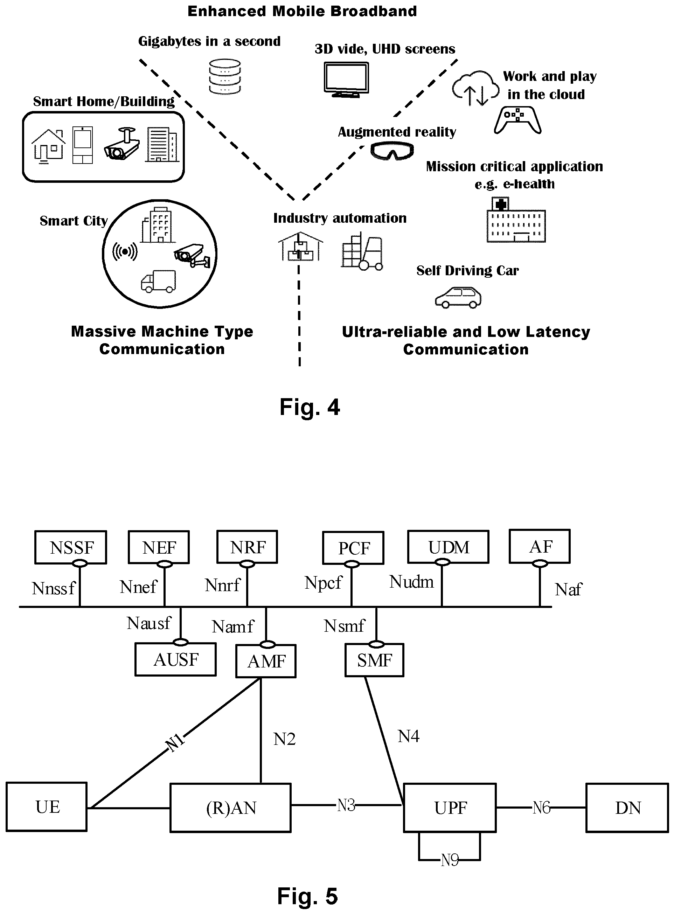

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band.. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term "*physical resource block*" (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE)**.* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term "*base station*" or "*radio base station*" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Relay Node

The term "***relay***" or "***relay node***" refers to a general node (in a communication system) or any communication device that is used to receive signals from one entity, amplify them and transmit them to another entity.

In other words, a relay may be any device controlled by a first entity (in the following usually assumed to be a base station/scheduling device/gNB) to relay signals between said first entity and a second entity (in the following usually assumed to be a UE). However, while a relay herein is described as amplifying signals between a base station (network node, scheduling device) and a user equipment, the relay of the present disclosure may be also used to amplify signals e.g. between two user equipments. In particular, a relay may be a UE, a base station (e.g. a gNB), an NCR, or an Integrated Access Backhaul (IAB).

For instance, a relay may be a RF (radio frequency) repeater, which does not perform baseband L1 processing such as demodulation and decoding or (H)ARQ, but merely receives, amplifies and re-sends the signals. However, the present invention is not limited thereto as the relay may also be a smart repeater, which performs demodulation, decoding, and/or error correction on signals before relaying them. In particular, the signal received by the relay from one entity that is to be relayed to another entity and the corresponding signal the relay transmits to said other entity may be identical (up to amplification) or may be different (e.g. in terms of modulation, but also e.g. due to error correction). Here, it should be noted that, in the present disclosure, (i) signals/transmissions received by the relay from one entity that are to be relayed to another entity are also referred to as "*signals*/*transmissions to be relayed*", and (ii) signals/transmissions of the relay node in which the relay relays a signal/transmission to be relayed as "***relay(ing) signals*/*****transmissions**".* In general, Transmissions to be relayed may be (i) received from the gNB or (ii) be transmission received from said other entity and to be relayed to the gNB; and relay transmission may be (i) transmissions transmitted to the gNB or (ii) be transmission towards said other entity. Furthermore, it is noted that the present disclosure is applicable to relay irrespectively of its layer (RF, L1, L2, L3, etc), applicable frequency band, domain of multiplexing or the like.

In general, relay nodes serve for extending the coverage in a cell and/or to improve performance on a cell edge while enabling cost reduction in comparison with increasing the number of base stations (network nodes). In the downlink, a relay node may receive signals from a network node (e.g. a scheduling device or base station) in downlink, amplifies them, and transmits them further e.g. to one or more terminals. In the uplink, the relay node may receive signals from said one or more terminals, amplifies them, and transmits them further to a network node (e.g. a base station). Thus, a relay node may have a plurality of radio access interfaces, in particular:
- an interface for radio access with a UE (also referred to as access link),
- an interface for radio access with a base station (also referred to as backhaul link), and/or
- an interface for sending control information to and/or receiving control information from the base station (also referred to as C-link).

Conceptually a relay node can be implemented in any layer (e.g., RF, L1, L2, or L3). However, for the sake of efficiency and cost reduction, a more simple repeaters on physical layer may be desirable.

LTE relaying was different to the use of a repeater which merely re-broadcasts (as an RF relay does) signals and was thus less cost-efficient. For example, a L2 relay in LTE actually received, demodulated and decoded the data, applied any error correction, etc to it and then retransmitted a new signal. In this way, the signal quality could be enhanced with an LTE relay, rather than suffering degradation from a reduced signal to noise ratio when using a repeater. For an LTE relay, the UEs communicated with the relay node, which in turn communicated with a "donor" eNB. It was possible to have a time division multiplex or frequency multiplex for the links UE-relay and relay-BS. Some other relay options have been provided, none of which supported beamforming. The LTE relaying concept has not been widely adopted.

The 3GPP has recently defined a study item followed by a work item for network-controlled repeaters (NCR) in new radio, rel. 18 (cf. 3GPP RP-213562, "New SI: Study on NR Smart Repeaters", RAN#94e, Dec. 2021, available freely at www.3gpp.org). Accordingly, a relay may be a repeater that can extend the network coverage and is supposed to be more cost efficient compared to the Integrated Access and Backhaul (IAB) that was introduced in Rel. 16.

One of the desirable features of network-controlled repeaters is the ability of beamforming. The LTE repeaters were designed to work in sub-3 GHZ bands, in which beam forming is not required [TS 36.106]. This is one of key difference between the network-controlled repeaters and the LTE repeaters. The network-controlled repeater should support both outdoor and indoor scenarios.

Objectives of the study item for the network-controlled repeaters include the following features. Network-controlled repeaters (also known as smart repeaters) are to be used for extension of network coverage on FR1 FDD/TDD and FR2 TDD bands, while during the study, FR2 TDD developments may be prioritized for both, outdoor and 021 (outdoor-to-indoor) scenarios. The repeaters should be only single hop stationary smart repeaters that are to be transparent to UEs. In other words, there would be the signal paths gNB->sRelay->UE and UE->sRelay->gNB only (sRelay here referring to a smart relay, a smart repeater, or network-controlled repeater used in these examples exchangeably). The smart repeaters should be capable of maintaining the gNB-repeater link and repeater-UE link simultaneously. Cost efficiency is a key consideration.

The concepts that will need to be studies include identifying which side (control) information would be necessary or desirable for the smart repeaters that involve an assumption of maximum transmission power (as defined in L1). The side information may include beamforming information, timing information to align transmission/reception boundaries, information on uplink and downlink TDD configuration, ON-OFF information for efficient interference management and improved energy efficiency, power control information for interference management, and/or the like.

As mentioned above, the amplify-and-forward (AF) relays (RF repeaters) were also possible for LTE. Such relay is transparent in the system, it amplifies the received signal and forwards it to users. The relay itself does not know whether the amplified signal is a desired signal received from the UE/gNB, or whether it is merely an interference or noise. Hence, the relay may increase the inference in the system if it is not configured/deployed properly. The LTE RF repeater has been designed to work in sub-3 GHZ bands, in which beam forming was not required (cf. 3GPP TS 36.106, "Evolved Universal Terrestrial Radio Access (E-UTRA); FDD repeater radio transmission and reception, "version 17.0.0 available freely at www.3gpp.org). However, the network-controlled repeaters, considered for Rel. 18, are supposed to work in both FR1 and FR2, with the possibility of beamforming. Hence, additional considerations should be taken for their design.

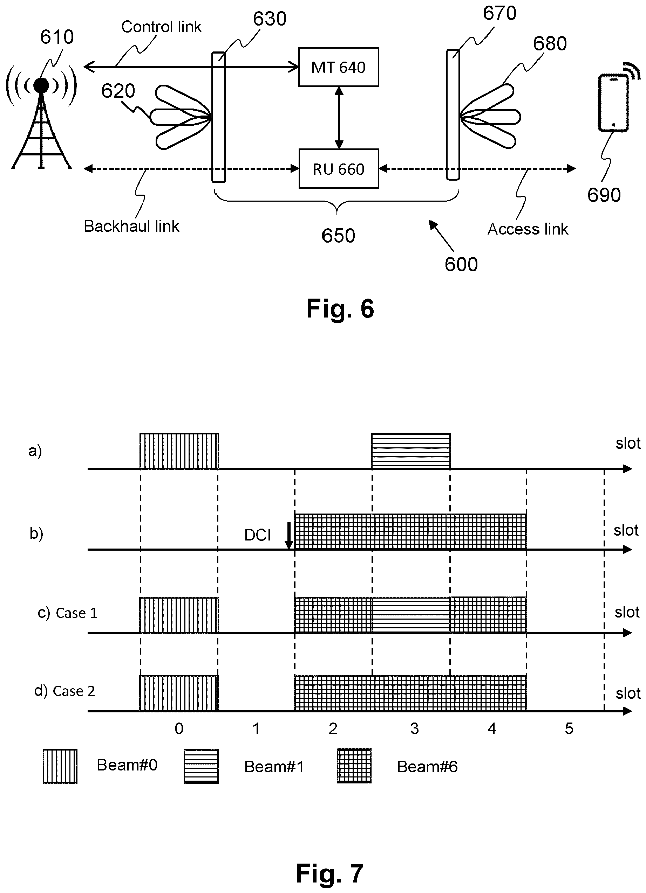

Fig. 6 shows an exemplary design of a communication system 600 including a relay 650, which may be a network-controlled repeater (NCR) as envisaged currently for the NR. The relay 650 includes, as functional units, a mobile termination section 640 (also referred to as mobile terminal or MT) and a radio unit (RU) section 660. The MT section 640 may receive control signals/information from a network node (gNB) 610 and configures the RU section 660 accordingly.

It may also send control information to the gNB 610. It is noted that the MT section 640 (which may be similar to a UE in its functionality) may use the channels described above (e.g. in Section "Downlink control channel monitoring, PDCCH, DCI" or others) to communicate with the gNB. The RU section 660 is responsible for receiving and amplifying the signal (including data and/or control information), received from the gNB 610 and/or one or more (serving) UE(s) such as the UE 690 illustrated in the figure. In NR, the term currently used for the MT section is NCR-MT, and the term currently used for the RU section is NCR-Fwd (Fwd for forwarding).

In Fig. 6, the relay 650 also includes a transceiver which is illustrated by way of a first transceiver portion 630 that transmits signals/transmission 620 towards the gNB 610 or receives signals 620 from the gNB 610 (and possibly further gNBs) and a second transceiver portion 670 that transmits signals 680 towards one or more UEs 690 or receives signals 680 from one or more UEs 690. As indicated, the transmissions/signals may be transmitted/received through beams (e.g. may be directional transmission). However, the present disclosure is not limited thereto.

As also indicated in Fig. 6, in particular in NR, the link between the gNB (i.e., the device controlling the relay) and the MT for receiving/sending control information is also referred to as Control Link or C-link, the link between the gNB and RU for receiving/forwarding signals is referred to as Backhaul Link, and the link between the RU and the UE receiving/forwarding signals is referred to as Access Link.

Examples of control information for the NCR are control signals for ON-OFF, power control, TDD UL/DL configurations, and beam configuration. In general, semi-static and dynamic indications may be used for the ON/OFF signalling and/or the power control and/or beam configuration. Dynamic and semi-static indications both could be supported.

Regarding the TDD UL/DL configuration, flexible symbols could be supported by the NCR, e.g. the gNB could configure flexible slots/symbols dynamically or semi-statically (i.e., the gNB could send indications to the NCR indicating whether a flexible symbol/slot is a DL or a UL symbol/slot dynamically or semi-statically). Dynamic and semi-static indications both could be supported. In general, the NCR could also be configured to not amplify signals over flexible slots/symbols.

It is further noted that Fig. 6 illustrates an exemplary functional communication structure of the relay. In general, there may be one transceiver unit that handles the transmission and/or reception from/to any entity. Such transceiver may include a plurality of antennas and amplifiers and, possibly, further circuitry for effectuating transmission and reception of signals. It may include more than one transmission and/or reception portions so that simultaneous transmission and reception to one or more communication peers is possible.

### Further Improvements

As further explained with reference to **Fig. 7**, the inventors have identified problems when configuring a relay node with two or more relay configurations to be used by the relay node for the transmission or reception of signals.

For instance, it may happen that the relay node, like the NCR, is configured with a periodic pattern, which defines a rule for periodically applying in time one or more first relay configurations, and that the relay node receives a further indication indicating one or more second relay configurations, which may collide or overlap in time with the periodic pattern of the one or more first relay configurations. For instance, as illustrated in row a), the gNB may intend to configure the relay node semi-statically with a periodic beam configuration, which configures the relay node to use beam #0 at slot 0 and beam #1 at slot 3. The first beam configuration can, for example, be configured to the relay node for sending control information over one or more of the radio access interfaces of the relay node. In addition, as illustrated in row b), the gNB may intend to configure the relay node with a dynamic indication, which indicates a second beam configuration configuring the relay node to use beam #6 at slots 2 to 4. The first beam configuration can, for example, be configured to the relay node for sending semi-persistent scheduling (SPS) traffic to one of the UEs that is served by the relay node.

However, the first beam configuration, which configures the relay node to use beam #1 at slot 3 for the reception or transmission of signals, collides with the second relay configuration, which configures the relay node to use beam #6 at slot 3 for the reception or transmission of signals. Accordingly, the relay node may not know, which of the first relay configuration or the second relay configuration is to be applied at slot 3. In particular, in the illustrated example the relay node may not know whether to prefer the first relay configuration and to apply beam #1 in slot 3 as shown in row c) or whether to prefer the second relay configuration and to apply beam #6 in slot 3 as shown in row d).

Furthermore, the gNB does not have the possibility to indicate to the relay node, which of the first relay configurations should be applied at slot 3, but the only possibility for the gNB would be to either indicate to the relay node to change the first relay configuration at slot 3 or to indicate to the relay node to use beam #6 at slot 2 and to use beam #6 at slot 4 with separate dynamic indications, like separate DCIs. However, such additional indication would undesirably enhance the signaling overhead between the gNB and the relay node.

In general, these problems apply to simultaneous transmission or reception by the relay node in any links (e.g. C-link, backhaul link, and/or access link), but also to simultaneous transmission by the relay node in more than one link. Furthermore, these problems apply to beam configurations, which may be indicated to be applied by one or more of semi-static signalling or dynamic signaling, but also to beam configuration, which may be indicated to be applied by a firmware of the relay node.

### Embodiments

The inventors have identified the possibility of providing improved procedures, for allowing to avoid one or more of the above described disadvantages. The present invention relates to different solutions and variants for such an improved procedures. Accordingly, the present disclosure provides techniques for increasing the efficiency of a communication system comprising a relay node. In particular, the present disclosure may increase the efficiency in a communication system, in which a relay supports (i) the simultaneous reception/transmission in different links, and (ii) a separate reception/transmission (i.e. at different times) in said different links.

The present disclosure in particular provides scheduling devices, corresponding methods for scheduling devices, communication devices (e.g. adapted/configured to perform the function of a relay node in a communication system), corresponding methods and (computer) programs (e.g. stored on a memory) for communication devices, communication systems comprising such scheduling devices and communication devices, as well as integrated circuits which, in operation, control a processes of scheduling devices/communication devices to perform the respective methods.

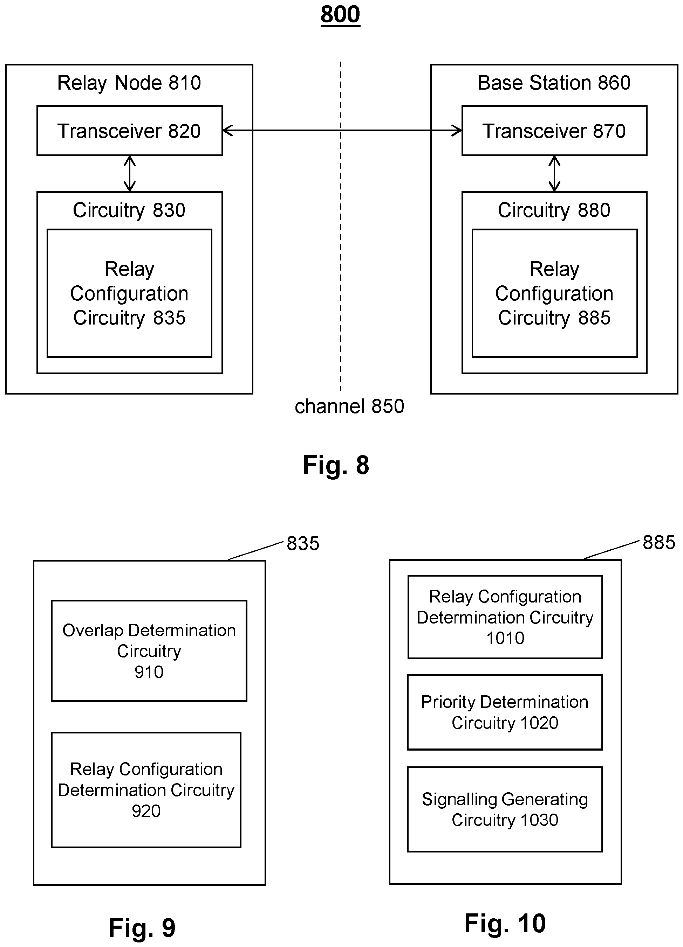

An example of such communication system is illustrated in **Fig. 8**. The communication system 800 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 8** illustrates a general, simplified and exemplary block diagram of a communication device 810 (here exemplarily assumed to be a relay node) and a scheduling device 860 (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 810 may also be a sensor device, a wearable device, or a connected vehicle, or a controller of an automated machine in an industrial factory. The communication device 810 is assumed to be able to function as a relay between the base station and another communication device.

As illustrated in **Fig. 8****,** the communication device 810 and the scheduling device 860 (eNB/gNB) may communicate with each other over a (wireless) physical channel 850 respectively using their transceivers 820 (relay node side) and 870 (base station side). Together, the scheduling device 860 and the relay node 810 form the communication system 800. The communication system 800 may further include other entities such as those shown in Fig. 1 and, in particular said other communication device towards which the relay node relays signals from the base station and/or from which the relay node receives signals to be relayed to the base station.

### Transceiver & Circuitry

As illustrated in **Fig. 8** (left-hand side), the communication device may comprise a transceiver and circuitry (or processing circuitry), and the scheduling device may comprise a transceiver and a (processing) circuitry.

The term "***transceiver***" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term "***circuitry***" herein refers to any hardware and/or software. For example the circuitry may include one or more processors (or processing units or any LSIs), microcontrollers, programmable hardware such as FPGAa and/or dedicated hardware such as ASICS or the line, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 810 as e.g. illustrated in **Fig. 8** (left-hand side) is provided. The communication device 810 comprises a transceiver 820 and circuitry 830. The transceiver 820, in operation: (i) receives signals to be relayed and transmits the received signals, (ii) transmits or receives control signals, and (iii) receives relay configuration signalling. The (processing) circuitry 830, in operation, (i) obtains, from the relay configuration signalling, a plurality of relay configurations, wherein each relay configuration is to be applied to the signals, which are transmitted or received by the communication device, and (ii) determines, for a time interval, where two or more relay configurations overlap, to apply a relay configuration among the two or more overlapping relay configurations to the signals, which are transmitted or received by the communication device, wherein the circuitry, in operation, determines, for the time interval, to apply the relay configuration, which has a highest priority among the two or more overlapping relay configurations.

It is noted that the circuitry 830 may implement more functionality than the above-mentioned obtaining and determining of the relay configuration(s), as it may, for instance, further control the transceiver 820. In particular, circuitry 830 may control the transceiver 820 to receive and transmit the signals to be relayed and to transmit or receive the control signals (in particular but not limited to the relay configuration signaling) and/or to receive or transmit data other data (i.e. data that is transmitted/received not as part of the relaying, as e.g., the relay node may be a UE that receives (non-control) data of which it is the final recipient).

Thus, the circuitry 830 is exemplarily considered to include Relay Configuration Circuitry 835, which is configured to perform said obtaining and determining of the relay configuration(s). The configuration may be provided by hardware adaption and/or by software.

**Fig. 9** shows an exemplary functional structure of the Relay Configuration Circuitry 835. In particular, the circuitry 835 may include Overlap Determination Circuitry 910 and Relay Configuration Determination Circuitry 920. The Overlap Determination Circuitry 910 may be responsible for (e.g. configured to) determining (i) whether or not a (i.e. a particular) relay configuration to be applied to a signal, which is transmitted or received by the transceiver 820, overlaps with a (e.g. any) other relay configuration, which is transmitted or received by the transceiver 820, in a (i.e. a particular) time interval; and/or whether or not a (i.e. a particular) transmission of control signalling overlaps with a (e.g. any) relaying transmission. Relay Configuration Determination Circuitry 920 may be responsible for determining, based on the result(s) of the determination(s) of the Overlap Determination Circuitry 910, for the time interval to apply the relay configuration among the overlapping relay configurations to the signals, which are transmitted or received by the transceiver 820, which has a highest priority among the overlapping relay configurations.

It is noted that any of the circuitries 830, 835, 910 and 920 may also implement more functionality. For instance, a circuitry may be configured to determine resources for the transmission/reception of the signals, in particular the resources for the transmission and reception of the signals to be relayed and the transmission and reception of the control signals. Furthermore, the time (e.g. start, end, and/or length) of the relay configurations may be determined by a circuitry and (if not determined by the Circuitry 910 itself) provided e.g. via an interface to the Overlap Determination Circuitry 910. For instance, the transceiver 820 may (e.g. by a scheduling DCI or through RRC signalling) receive signalling including an indication indicating a validity period, a rule or similar time period information, which determines the time interval(s), at which to apply one or more of the relay configurations to the transmission and reception of the signals. A circuitry may obtain said indication from the signalling, and the relay may determine a validity period, a rule or similar time period information from that indication.

Furthermore, the priority of each overlapping relay configuration may be determined by a circuitry and (if not determined by the Circuitry 920 itself) provided e.g. via an interface to the Relay Configuration Determination Circuitry 910. The determination of the priority of each overlapping relay configuration may be performed in accordance with any of the possible determination methods, which are described below. In particular, the transceiver 820 may (e.g. by a scheduling DCI or through RRC signalling) receive signalling including an indication indicating the priority of at least one of the overlapping relay configurations or the priority of at least one of the overlapping relay configurations may be pre-configured in a firmware of the relay node.

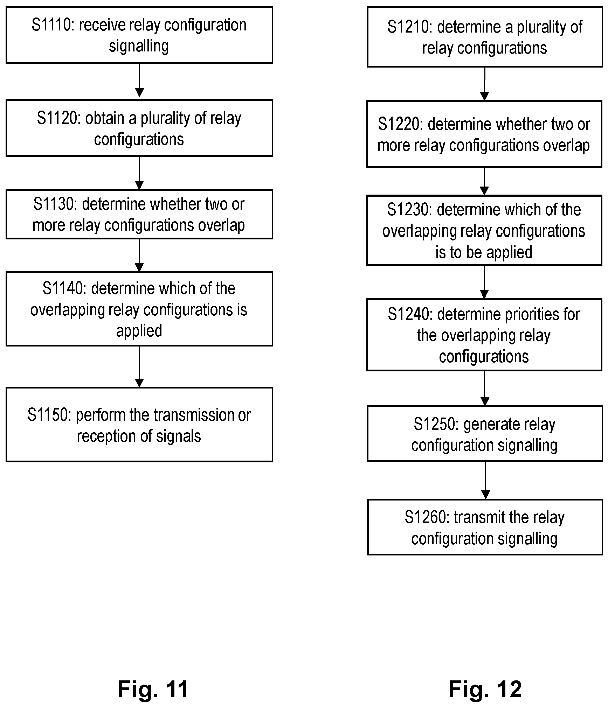

In correspondence with the above described communication device, a communication method to be performed by a communication device is provided. As shown in **Fig. 11**, the method comprises (i) a step S1110, of receiving relay configuration signalling; (ii) a step S1120 of obtaining, from the relay configuration signalling, a plurality of relay configurations, which each are to be applied to signals, which are transmitted or received by the communication device; and (iii) a step S1140 of determining, for a time interval, where two or more relay configurations overlap, to apply a relay configuration among the two or more overlapping relay configurations to the signals, which are to be transmitted or received by the communication device. Hereby, for the time interval, the relay configuration, which has a highest priority among the two or more overlapping relay configurations is applied.

In correspondence with the above description of the communication device, the communication method may (optionally) comprise a step S1130 of determining (i) whether or not a (i.e. a particular) relay configuration to be applied to a signal, which is transmitted or received by the transceiver 820, overlaps with a (e.g. any) other relay configuration to be applied to a signal, which is transmitted or received by the transceiver 820, in a (i.e. a particular) time interval; and/or whether or not a (i.e. a particular) transmission of control signalling overlaps with a (e.g. any) relaying transmission. Step 1130 may also be a part of step 1120 and may be for example based on a validity period, rule or other time information, which each may indicate one or more time interval(s), at which a (e.g. any) relay configuration is to be applied to signals, which the communication device transmits or receives.

It is noted that, if the relay determines, e.g. in step S1140, out of the overlapping relay configurations, a relay configuration for the transmission or reception of the signals in the time period, where the relay configurations overlap, the relay performs in step S1150 the transmission or reception of said control signals in said time period in accordance with the relay configuration determined for said time period.

According to another exemplary embodiment, in correspondence with the above described method for a communication device, an integrated circuit may be provided. Said integrated circuitry, in operation, may control a process of a communication device, the process including the steps of the above method for the communication device. Said integrated circuitry may e.g. be the above described circuitry 830 or 835, and/or may be deployed/deployable in a communication device, in particular a relay node.

As also shown in **Fig. 8** (right-hand side), according to another exemplary embodiment, a scheduling device 860 is provided. The scheduling device 860 comprises a transceiver 870 and circuitry 880. The (processing) circuitry 880, in operation: (i) determines a plurality of relay configurations, which are configured to be applied by a communication device to signals, which are transmitted or received by the communication device; (ii) generates a relay configuration signalling indicating each of the plurality of relay configurations; (iii) determines, for a time interval, where two or more relay configurations overlap, a priority of each of the overlapping relay configurations; and (iv) generates relay configuration signalling including an indication of the priority of each of the overlapping relay configurations. The transceiver 870, in operation, (i) transmits to the communication device the relay configuration signalling, and (ii) receives relayed signals from the communication device and/or transmits signals to be relayed to the communication device, wherein the transceiver, in operation, receives, for the time interval, signals, to which a relay configuration is applied by the communication device having a highest priority among the two or more overlapping relay configurations.

To be specific, the processing circuitry may determine all or a part of the plurality of relay configurations, which are to be used by the communication device for the transmission or reception of signals, and other relay configurations may already be set and the communication device may be configured with them, for example by semi-static or dynamic signaling, which was already received by the communication device before or by a firmware of the communication device. Similar, the processing circuitry may determine all or a part of the priorities of the overlapping relay configuration, and the remaining priorities may already be set and the communication device may be configured with them, for example by semi-static or dynamic signaling, which was already received by the communication device or by a firmware of the communication device. As will become also apparent from the description below, the indications for indicating the plurality of relay configurations may be transmitted at a same time interval or may be transmitted at different time intervals. Similar, the indications indicating the priorities of the plurality of relay configurations may be transmitted at a same time interval or may be transmitted at different time intervals. In particular, the transmissions of the indications of the priorities may not always be included in relay configuration signaling, which indicates one of the pluralities of relay configurations, but may be signaled separately or be pre-configured in the relay node.

Transceiver 870 may also receive relay signals from the communication device, and/or transmit signals to be relayed to the communication device. The circuitry 880 may implement more functionality than the just-mentioned determining and generating, as it may, for instance, further control the transceiver 870 to transmit or receive control signals (e.g. to transmit the relay configuration signalling), and/or to receive or transmit data. Furthermore, the gNB may transmit or receive control signalling in the first resources, and receive the relaying transmission(s) in which the relay relays the signals transmitted by the UE(s) in the second resources. In general, any transmission or reception by the transceiver 870 may be controlled by the circuitry 880.

Thus, the circuitry 880 is exemplarily considered to include Relay Configuration Circuitry 885, which is configured to perform said determining and generating. The configuration may be provided by hardware adaption and/or by software. An exemplary functional structure of Relay Configuration Circuitry 885 is shown in **Fig. 10**. In particular, the Scheduling Circuitry 885 may include Relay Configuration Determination Circuitry 1010, responsible for the determination of all or a part of the plurality of relay configuration, which are to be used by the communication device for the transmission or reception of signals; Priority Determination Circuitry 1020, which may be configured to determine the priorities of all or a part of the overlapping relay configurations; and Signalling Generating Circuitry 1030, which may generate the relay configuration signalling. It is noted that the Scheduling Circuitry 885 may also implement more functionality, as it may, for instance also be responsible for determining whether the plurality of relay configurations overlap at a (e.g. any) time interval or determine the time interval(s), at which the relay configurations overlap.

Furthermore, in correspondence with the above described scheduling device, a communication method to be performed by a scheduling device is provided. As shown in **Fig. 12**, the method comprises a step S1210 of determining a plurality of relay configurations, which are to be used by a communication device for the transmission and reception of signals; a step S1220 of determining, in accordance with the first and the second transmission configuration, a first resource allocation to be used by the communication device for the transmission of the control signalling; a step S1240 of determining, for a time interval, where two or more of the plurality of relay configurations overlap, a priority of each of the overlapping relay configurations; a step S1250 of generating a relay configuration signalling indicating each of the plurality of relay configurations and including an indication of the priority of each of the overlapping relay configurations; and a step S1260 of transmitting, to the communication device, the relay configuration signaling. Furthermore, the method for the scheduling device may (optionally) comprise a step S1220 of determining whether two or more of the plurality of relay configurations overlap in one or more time interval(s) and a step S1230 of determining, which of the overlapping relay configurations is to be applied in the one or more time interval(s) by the communication device.

In correspondence with the above description of the communication device and of the scheduling device, the determination made in step S1230 may not be necessarily performed by the scheduling device, but the determination may be made by the communication device in accordance with the priorities allocated to the overlapping relay configurations, which may be pre-configured in the communication device. Similar, step S1220 may not be performed necessarily by the scheduling device, but may be performed by the communication device as described above in step S1130.

According to another exemplary embodiment, in correspondence with the above described method for a scheduling device, an integrated circuit is provided. Said integrated circuitry, in operation, controls a process of a scheduling device, the process including the steps of the above method for the scheduling device. Said integrated circuitry may e.g. be the above described circuitry 880 or 885, and/or may be deployed/deployable in a communication device, in particular a scheduling device.

It is further noted that the order of the steps may be different than shown in Fig. 11 and Fig. 12, and/or some of the steps may be performed together or even jointly. For instance, as further explained below, the base station may perform any number and/or combination of the determination steps (S1220, S1230, S1240) together/jointly, perform the generation of the relay configuration signalling in steps S1250 in one step, and/or transmit the relay configuration signalling (steps S1260) in a single time period or in a plurality of separate time periods. Furthermore, any of the steps performed by the base station may in general be performed jointly with corresponding steps for other relay nodes, as well as in consideration of traffic conditions and quality requirements of services used by one or more UEs, which receive relayed signals and/or transmit signals to be relayed to the relay node(s).

Moreover it is noted that, since the present disclosure relates to a (scheduling) device configuring a communication device (e.g. a relay node) and said communication device, the details and embodiments described herein apply to (and may be implemented by them) each of the communication device and the or scheduling device, as well as to the corresponding methods and integrated circuits unless explicit statement or context indicates otherwise. In particular, the scheduling device may be configured to generate and transmit the control signals as described below and the communication device may be configured to receive such signalling and obtain the respective indications therefrom. In particular, any of the steps/operations described below may be performed or controlled by the circuitry 830 (on the communication device side) and/or the circuitry 880 (on the base station side). Furthermore, any reception and transmission steps may be performed by the transceiver 820 (on the UE side) and/or the transceiver 870 (on the base station side) (e.g. by being controlled by the respective circuitry to do so).

### Relay Configurations

In general, the term "***relay configuration***" is to be understood broadly as any setting/configuration of a state or parameter related to operations (receiving and transmitting of signals to be relayed or control signals) of the relay node and, in particular, related to the transmission(s) of the relay node in which the relay node relays signals to be relayed (in the present disclosure also referred to as relay transmission) or transmits or receives control signalling to or from the gNB. Especially, a relay configuration may be indicated by the gNB to the relay node for configuring parameters or states of the transmission and/or reception of signals on any of the interfaces of the relay node (backhaul link, C-link, access link) either separately or in common. In other words, any relay configuration may configure transmissions or receptions over each interface of the relay node separately, i.e. separately for each link (backhaul link, C-link, access link) or in common, jointly for all the links (backhaul link, C-link, access link). Accordingly, the relay node may be configured at the same time interval with different relay configurations for each link or with a single relay configuration, which is applied for all the links.

In particular, a relay configuration may specify: (i) whether or not the transmission of signals is to be performed; (ii) a transmission power for transmissions of the relay device, (iii) whether a flexible symbol of a slot format is a downlink symbol or an uplink symbol, (iv) whether a flexible slot of the slot format is a downlink slot or an uplink slot, (v) a TDD UL/DL configuration for the transmission or reception of signals, (vi) a beam configuration (e.g., a Transmission Configuration Indicator (TCI) as in LTE/NR) for the transmission or reception of the signals, and/or (vii) a bandwidth part for the transmission or reception of the signals. It is noted that a relay configuration may specify any number and combination of the above points (i) to (vii), and/or may specify other parameters related to relay transmissions.

Usually, at a/each given time, one relay configuration is active (for each link or jointly for all three links), and the relay node performs reception and transmissions of signals in accordance with said relay configuration. In accordance with the points (i) to (vii), directly above, a relay configuration signalling for indicating a relay configuration used for the transmission of signals by the relay node may include, as part of the relay configuration indication, indication indicating of one or more of said above points (i) to (vii). Similar, a relay configuration signalling for indicating a relay configuration used for the reception of signals by the relay node may include, as part of the relay configuration indication, indication indicating of one or more of said above points (iii) to (vii).

Regarding the above points (iv) and (v), it is further noted that the present invention is not limited to the case that the granularity of the slot format is given in terms of slots or symbols. In general, any time duration/interval other than slots or symbol may be used.

In general, any such relay configuration is intended to be active or to be used by the relay node for the transmission or reception of signals ("applied" to the signals) at specific time intervals, which may be also signified as validity period or validity time periods of the relay configuration. The validity period of a relay node may for example include one or more contiguous or non-contiguous time intervals or time resource unit(s). The time resources of a validity period of any relay configuration may be indicated to the relay node by dynamic or semi-static signaling or may be pre-configured in the relay node.

Stated differently, a validity period of a relay configuration may be each single part or the sum of the time intervals, at which said relay configuration is to be activated by the relay node or is to be applied by the relay node for performing the transmission or reception of signals.

Here, it is noted that the validity period (i.e. the time interval) of a relay configuration is defined in general by a length/duration of the validity period and a reference time point, e.g. the start or end point of the validity period. In general, the length of the validity period and the reference time point may be determined, indicated, obtained, etc. together or in separate steps. It is noted that both the length of the validity period and said reference time point are indications of the validity period of the relay configuration. In other words, a validity period indication may indicate the length of the validity period and/or indicate a reference time point based on which an absolute position of the validity period can be fixed.

For instance, the base station may configure (e.g. semi-statically or dynamically) a validity period length, and one or more start positions of the validity period for any relay configuration. The start position of the validity period of a relay configuration may be also indicated implicitly by the time the relay configuration signalling is received by the relay. For instance, the start of the validity period of a relay configuration may be the start (or said start plus a predetermined offset and/or plus an offset explicitly indicated by the relay configuration signalling) of the next slot after the reception of the relay configuration signalling indicating said relay configuration. Thus there may be two (separate) validity period signalling: (i) a first validity period (length) signalling that includes "*validity length indication*" indicating the length of a validity period of a particular relay configuration and/or configuring the length of validity periods of the relay configurations; and (ii) a second validity period signalling indicating said reference point and/or a periodicity of the validity period.

### Overlap & Determination of Overlap

It is noted that, in the present disclosure, the term "***overlaps***" refers to an overlap in time. More specifically, a first relay configuration and a second relay configuration may be considered to be overlapping when at least a part of a validity periods of the first relay configuration is intended to be active or to be used by the relay node at a same time instance (i.e. at overlapping time instance(s)) as a part of a validity period of the second relay configuration.

For instance, the relay node or the gNB may determine whether two relay configurations overlap based on the resources allocated to said two transmissions. In other words, if the time index (e.g. a slot/symbol index) of a (e.g. at least one) resource of a validity period or active time of the first relay configuration is identical to the time index of a (e.g. any) validity period or active time of the second relay configuration, the first relay configuration and the second relay configuration may be considered overlapping (e.g. determined to overlap by the relay and/or the gNB).

As mentioned above, when the relay configuration for a transmission or reception of signals by the relay node is to be determined (e.g. in step S1140 or step S1230) for a time interval, it may be determined (e.g. in step S1130 or step S1220) whether or not two or more relay configurations overlap in said time interval. It is noted that, in the present disclosure, that the determination whether or not relay configurations are overlapping may be performed only for a particular frequency range (e.g. a BWP). For instance, when determining whether or not two or more relay configurations overlap, only relaying transmissions in particular/predetermined/configured frequency range (e.g. a frequency range in which the transmission or reception of a signal, to which the two or more relay configurations are to be applied) may be taken into account. A relay configuration that overlaps with another relay configuration outside said frequency would then still be considered non-overlapping.

Furthermore, the determination whether or not relay configurations are overlapping may be performed for each interface of the relay node, i.e. each link (backhaul link, C-link, access link) separately. A relay configuration that overlaps with another relay configuration configured for another interface (or link) would then still be considered non-overlapping. Alternatively, the determination may be performed jointly for the interfaces (links), so that also two relay configurations being configured for the different interfaces (links) may be considered overlapping in time.

As mentioned above, the relay may obtain the plurality of relay configurations based on an indication included in signalling (such as the relay configuration signalling) received from the gNB. Furthermore, the relay may determine the validity period(s) of one or more of the plurality of relay configurations e.g. based on an indication included in signalling received from the gNB and/or the validity periods validity period(s) of one or more of the plurality of relay configurations may be pre-configured in the relay node. The relaying instances (i.e., the validity period of a relay configuration) could be indicated dynamically or semi-statically by the gNB.

In other words, the NCR may know the validity periods of the relay configurations, from predefined configurations, RRC signalling or received DCIs. For instance, the relay node may receive control signalling from the gNB that includes indication(s) of the validity period of one or more relay configurations, obtain said indication(s) from the signalling, and determine the validity period(s) based on the obtained indication(s). Based on the known validity periods, the relay may then determine (S1130) when and whether overlapping occurs.

### Priority of a relay configuration

In the present disclosure, the term "***priority***" refers to an index, which indicates an order of how to apply relay configurations, which overlap in a specific time interval, to the transmission or reception of signals. The priority of a relay configuration could be determined separately for the receiving and transmitting of signals, which are to be relayed by the relay node, and for the receiving and transmission of control signals. Alternatively, the priority of relay configurations to be used for the transmission and reception of control signals and the priority of relay configurations to applied to the transmission and reception of signals to be relayed by the relay node could be determined on a common scale. In other words, the priority of relay configurations configured to be used by the relay node at a certain time interval, could be determined for each interface of the relay node, i.e. each link (backhaul link, C-link, access link) separately or jointly for all the interfaces (links).

Accordingly, the priority of a relay configuration can serve as a measure of the importance of said relay configuration or of the signals to which said relay configuration is applied.

Usage of the priority of the relay configurations allows the gNB to indicate to a relay node, which of possible and activated relay configurations is to be preferred at a specific time interval, where two or more of the relay configurations overlap or collide. Similar usage of the priority allows the relay node to determine, which of relay configurations has a highest priority and therefore a highest importance, when the relay node determines that two or more of indicated relay configurations overlap or collide at a specific time interval. Accordingly, by indicating the priority of a relay configuration, the base station can notify the relay node of prioritized relay configuration, which are to be applied in case of an overlap of relay configurations in time. On the other hand, by determining the priority of overlapping relay configurations, the relay node can know, which of the overlapping relay configuration is to be applied in case of overlapping relay configurations.

The priority of a relay configuration may be configured in the relay node by a firmware of the relay node or may be indicated by the gNB to the relay node by dynamic signaling, (e.g. through a DCI) and/or semi-static signaling (e.g. through RRC signaling) and may be obtained by the relay node accordingly. Furthermore, as will be apparent from the description below, the priority of a relay configuration may be implicitly indicated by the relay configuration signaling, which indicates the relay configuration.

The priority of a relay configuration may be for example indicated to the relay node by use of a finite number of priority levels (e.g. 2 or 4), which are supported by the relay node. Thereby, the smallest (lowest possible) priority level may be associated with the highest priority or alternatively the largest (highest possible) priority level may be associated with the highest priority. Alternatively, the relay node may receive an indication from the base station, which indicates high priority (HP) as the highest priority of two priority levels and low priority (LP) as the lowest priority of two priority levels.

In order to indicate the number of supported priority levels the circuitry 835 may, in operation, generate a priority level report (capability report) including an indication of the predetermined number of the supported priority levels and the transceiver 820, in operation, may transmit the priority level report. For example, the priority level report may be generated and transmitted by the relay node in response to receiving a priority level report request from the base station.

### Override

In general, the relay node may be configured with more than one relay configuration at a same time period. Of these relay configurations could then override the other, i.e. could be used for the transmission and reception of signals at that time period, while the other overlapping relay configuration(s) are not considered at that time period. More specifically, the relay node may determine a priority of the overlapping relay configuration(s) at that time period and select the relay configuration, to which the highest priority is allocated (e.g. by dynamic or semi-static indication) among the overlapping relay configurations for the transmission and reception of signals in that time period. The remaining relay configurations having a lower priority than the selected one, are then neglected and not considered to be applied to the transmission or reception of signals in that time period.

### Exemplary implementations

Different examples are presented in the following. Exemplary implementations of these examples will be first explained in connection with relay configurations, which specify different beam configurations i.e. with a scenario where the relay node is configured by the relay configuration to apply specific beam configurations at time resources indicated to the relay node. However, the different examples and their underlying concepts apply equally to implementations in connection with other parameters specified by the relay configuration, for example the parameters, which are described in points (i) to (vii) above. Furthermore, while, in the following examples, slots are used as exemplary time resource units for determining time intervals, in which relay configurations overlap, the present disclosure shall not be limited thereto. Instead, the time intervals, for which overlapping relay configurations are determined, may be any applicable time resource units.

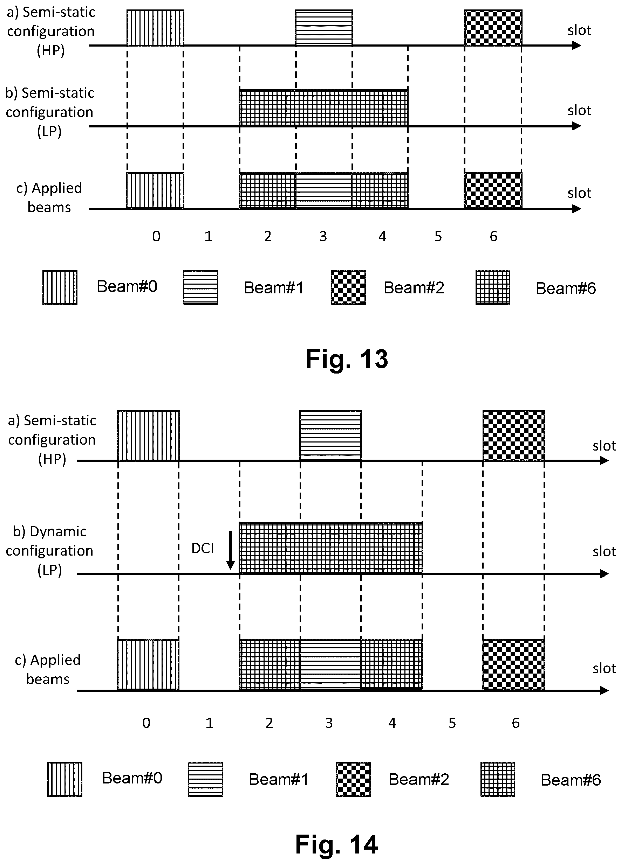

According to a first example, two or more relay configurations are configured with two different semi-static relay configurations, to which different priority levels are assigned. An exemplary implementation for such a scenario is shown in Fig. 13. As apparent from row a) of this Figure, the relay node is indicated by a semi-static indication with a first beam configuration, which configures the relay node to use beam #0 at slot 0, beam #1 at slot 3 and beam #2 at slot 6 for the transmission or reception of signals. In addition, as shown in row b), the relay node is indicated with a second beam configuration, which configures the relay node to use beam #6 at slots 2 to 4.

Consequently, for the slots, at which the indicated beam configurations are not colliding, i.e. are non-overlapping, the relay node transmits or receives signals with the beams indicated by the active relay configuration, as shown in row c). However, the relay node determines that the first beam configuration and the second beam configuration overlap at slot 3, so that the relay node will select the beam configuration to be applied in slot 3 in accordance with the priorities, which are allocated to the first and second beam configuration. In the present example, two priority levels are used, namely high priority (HP) and low priority (LP), which may be indicated to the relay node by higher level signaling (for example RRC signaling) or may be pre-configured in the relay node.

In the present example, the first beam configuration may be for example used for the transmission and reception of signals by the relay node at time intervals, where control information, like synchronization signal blocks (SSBs), which may be received by the relay node through the control link, or other common control information, which may be relayed by the relay node through the relaying links (backhaul link and access link), is transmitted or received. Accordingly, the first beam configuration may be allocated with high priority. The second beam configuration may be, for instance, used for the transmission and reception of signals by the relay node at time intervals, where SPS signals or other data signals are received from the base station and/or where the received SPS or data signals are transmitted to a particular UE. Accordingly, the second beam configuration may be allocated with low priority.

Accordingly, by using the priority allocated to the first and second beam configurations, the relay node determines that beam #1 is to be applied at slot 3 to the transmission or reception of signals. Consequently, it is avoided that the control information, which is to be transmitted or received at slot 3, is transmitted or received with an unintended beam configuration, which may lead to a deterioration in the transmission of control signaling. On the other hand, when scheduling the second beam configuration for the relay node, the base station can use contiguous time intervals as scheduling units, and so that the base station only needs to indicate one contiguous time interval (slots 4 to 6) for the second relay configuration, but does not need to indicate to separate time intervals (at slot 4 and slot 6) for the second relay configuration. Accordingly, the processing in the base station can be simplified for configuring the relay node with specific relay configurations.

The present disclosure is not limited to the case of relay configuration, which are semi-statically indicated to the relay node, but may be also applied to relay configurations, which are dynamically indicated to the relay node.

According to a second example, at least one of the plurality of relay configurations is indicated by semi-static signalling, and at least one of the plurality of relay configurations is indicated by dynamic signaling, and the priority of the at least one relay configuration, which is indicated by semi-static signalling is different from the priority of the at least one relay configuration, which is indicated by dynamic signaling.

For example, the priority of a relay configuration, which is indicated by semi-static signalling may be higher than the priority of a relay configuration, which is indicated by dynamic signaling. This would allow to prioritize the application of the semi-static relay configuration in case of an overlap with a dynamically indicated relay configuration, so that the semi-static relay configuration may be used for the transmission and reception of control signals as described for the first example.

Alternatively, the priority of a relay configuration, which is indicated by semi-static signalling may be lower than the priority of the relay configuration, which is indicated by dynamic signalling. This would allow to prioritize the application of the dynamically indicated relay configuration in case of an overlap with a semi-static relay configuration, so that the flexibility in scheduling dynamic relay configurations may be increased. For example, setting the priorities in this way may allow a base station semi-statically configure default relay configurations with predetermined periodicity or at periodic time intervals, but to alter the default relay configuration for a (i.e. a specific) time interval by a dynamic indication, for instance in consideration of user traffic requirements for one or more UEs, which are served by the relay node.

An exemplary behavior of a relay node being configured with a semi-static beam configuration and a dynamically indicated beam configuration is shown in **Fig. 14**. The relay node is configured by a semi-static indication with a first beam configuration, shown in row a), which configures the relay node to use beam #0 at slot 0, beam #1 at slot 3 and beam #2 at slot 6 for the transmission or reception of signals. In addition, the relay receives a dynamic indication through a DCI at slot 1, from which the relay node obtains a second beam configuration, shown in row b), which configures the relay node to use beam #6 at slots 2 to 4.

Consequently, for the slots, at which the indicated beam configurations are not colliding, i.e. are non-overlapping, the relay node transmits or receives signals with the beams indicated by the active relay configuration, as shown in row c). However, the relay node determines that the first beam configuration and the second beam configuration overlap (collide) at slot 3, so that the relay node will select the beam configuration to be applied in slot 3 in accordance with the priorities, which are allocated to the first and second beam configuration. In the present example, the relay node is configured with two priority levels, namely high priority (HP) and low priority (LP), and is configured to allocate high priority to a relay configuration indicated by semi-static signaling and to allocate low priority to a relay configuration indicated by dynamic signalling.

Accordingly, for slot 3, the relay node determines the first beam configuration to have the highest priority among the overlapping relay configurations (i.e. the first beam configuration and the second beam configuration). As a consequence, the relay node determines to use beam #1 in slot 3, which is configured by the first beam configuration having the highest priority among the overlapping beam configurations in slot 3 in this example.

Accordingly, in the present example by using the priority to allocate the highest priority level to the beam configuration, which is indicated semi-statically, it is avoided that the control information, which is intended to be transmitted or received by the relay node or the base station at slot 3, may be transmitted or received with the unintended beam configuration configured by the dynamically indicated second beam configuration. Accordingly, the deterioration in the transmission of control signaling between the base station and the relay node can be avoided in all slots where the relay node is configured with the semi-static beam configuration as a relay configuration. On the other hand, when scheduling the second beam configuration for the relay node, the base station can use contiguous time intervals as scheduling units, so that the base station only needs to indicate one contiguous time interval (slots 4 to 6) for the second relay configuration in a single DCI, but does not need to indicate to separate time intervals (at slot 4 and slot 6) for the second relay configuration with separate DCIs. Accordingly, the processing in the base station can be simplified for configuring the relay node with specific relay configurations.

In the present example, the base station may indicate to the relay node at a time of indicating one of the beam configurations or at a different time (e.g. before indicating one or all of the beam configurations), whether the semi-static beam (relay) configurations or the dynamically indicated beam (relay) configurations are allocated to the HP level or the LP level. Alternatively, such information may be pre-configured in a firmware of the relay node.

According to a third example, an indication of a relay configuration, which is dynamically signaled may also indicate a priority of the indicated relay configuration. In particular, in the third example, at least one of the plurality of relay configurations is indicated by dynamic signalling, and the dynamic signalling comprises priority information, which indicates the priority of the corresponding relay configuration. Such an implementation may be especially beneficial in a scenario, where already two or more semi-static relay configurations are applied by the relay node and where the two or more semi-static relay configurations are allocated with different priorities, which for example consider the content of the signals, which are to be transmitted or received with the configured relay configurations.

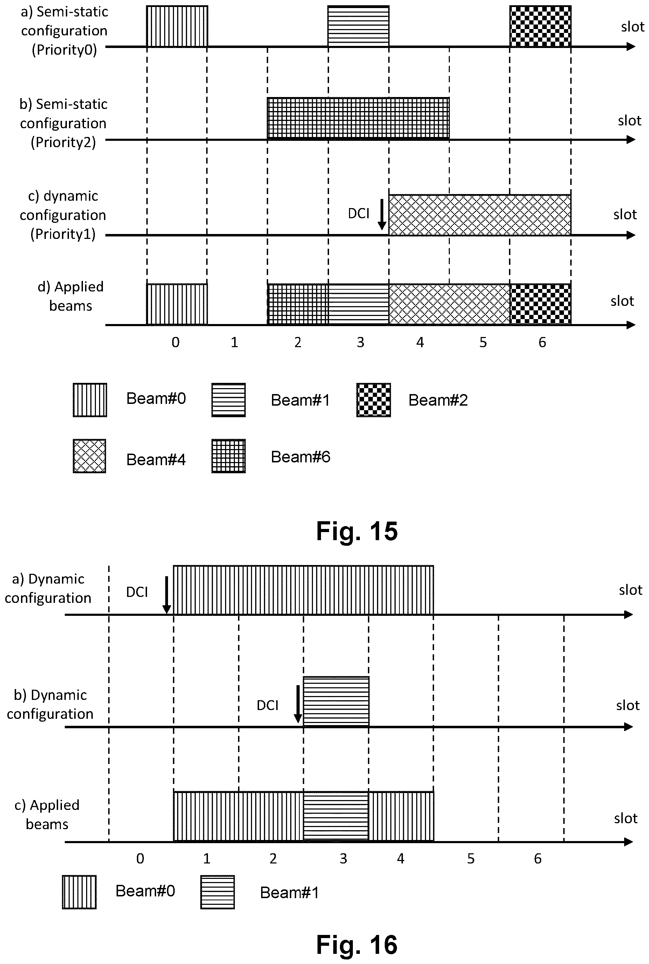

**Fig. 15** illustrates an exemplary behavior of a relay, which is configured with two semi-static beam configurations (relay configurations) allocated with different priority levels, and which additionally receives a dynamically indicated beam configuration (relay configuration). As can be derived from row a), the relay node is configured semi-statically with a first beam configuration, which configures the relay node to use beam #0 at slot 0, beam #1 at slot 3 and beam #2 at slot 6 for the transmission or reception of signals. In addition, as shown in row b), the relay node is indicated with a second beam configuration, which configures the relay node to use beam #6 at slots 2 to 4.

In this scenario, the relay node supports a finite number of priority levels, which is larger than 2, for example up to N priority levels (priority0, priority1, priority2, ..., priorityN). The priority levels may be ordered in such a manner that a small priority level or priority index indicates a high priority, meaning that priority 0 > priority1 > priority2 >... > priorityN. Alternatively, it may also be possible to order the priority levels vice versa, i.e. that a large priority level or priority index indicates a high priority, meaning that priority 0 < priority1 < priority2... < priorityN.

In the example of Fig. 15, the first beam configuration is allocated with priority level priority0, and the second beam configuration is allocated with priority level priority2. Here, the priority levels are ordered to follow the rule priority 0 > priority1 > priority2, so that the first beam configuration is allocated with a higher priority than the second beam configuration. Accordingly in slot 3, where the first beam configuration overlaps with the second beam configuration, the relay node determines that beam #1, which is configured by the first beam configuration, is to be used for the transmission and reception of signals, since the first beam configuration has the highest priority among the overlapping beam configurations in slot 3.

In addition, the relay node receives a dynamic indication through a DCI at slot 3, from which the relay node obtains a third beam configuration, shown in row c), which configures the relay node to use beam #4 at slots 4 to 6. The dynamic indication, which indicates the third beam configuration, may include priority information, for example in form of a certain number of bits included in the control information, which indicates the priority of the third beam configuration, in this example priority1. In general, a number of bits included in the control information and used for indicating the priority level of a relay configuration may depend on the number of defined priority levels. For example one bit may be used, if two priority levels are supported (e.g. HP and LP described above), two bits may be used, if up to four priority levels are supported (e.g. priority0, priority1, priority2, priority3) and so on.

Since the third beam configuration is allocated with priority1, it has a lower priority than the (semi-static) first beam configuration, but a higher priority than the (semi-static) second beam configuration. Accordingly, in slot 4, where the third beam configuration overlaps with the second beam configuration, the relay node determines that beam #4, which is configured by the third beam configuration, is to be used for the transmission and reception of signals, since the third beam configuration has the highest priority among the overlapping beam configurations in slot 4. Similar, in slot 6, where the first beam configuration overlaps with the third beam configuration, the relay node determines that beam #2, which is configured by the first beam configuration, is to be used for the transmission and reception of signals, since the first beam configuration has the highest priority among the overlapping beam configurations in slot 6.

Hence, by using the priority information to indicate a corresponding relay configuration, it is possible for the gNB to variably set a priority of a dynamically indicated relay configuration. For example, the priority of a relay configuration may be determined by the gNB in consideration of user traffic requirements for one or more UEs, which are served by the relay node or in consideration of the importance of a content of the signals, which are transmitted by the indicated relay configuration and the other (semi-static) relay configurations, which are already configured for the relay node. Hence, by indicating the priority information, the gNB can more flexibly control the priority level of the relay configurations, which are configured for a relay node. Notably, it is not necessary that the priority information is included in the same control information message, which indicates a corresponding relay configuration, but may be indicated with a separate control information message, dynamically or semi-statically. Further, the priority information may not only be received by the relay node from the base station for dynamically indicated relay configurations, but also for semi-statically indicated relay configurations.

In a fourth example, as an alternative or in addition to indicating the priority information of a relay configuration, the gNB may indicate overriding information to the relay node for a (i.e. a specific) relay configuration, which indicates to the relay node to prioritize the corresponding relay configuration in each time interval, where the corresponding relay configuration overlaps with other relay configurations, which are configured for the relay node. In particular, in the third example, at least one of the plurality of relay configurations is indicated by dynamic signalling, and the dynamic signalling comprises overriding information, which indicates to override, for the time interval, the overlapping relay configurations. The overriding information may for example be included in a dynamic indication, which indicates a relay configuration, in the form of a flag (e.g. 1 bit), which indicates whether to override overlapping other relay configurations at each time period or not. In other words, the overriding information has a function to set the priority of a corresponding relay configuration to the highest priority among the overlapping relay configurations, for each time interval, where the corresponding relay configuration overlaps with another relay configuration.

As will be understood by those skilled in the art, the overlapping information may be also included in a dynamic indication in addition to the priority information described in the third example. For example, if dynamic indication, which indicates the third beam configuration in Fig. 15, would include overriding information, which indicates to override the overlapping beam configurations (i.e. the second beam configuration in slot 4 and the first beam configuration in slot 6), the relay node would set the priority of the third beam configuration to the highest priority independent of the indicated priority levels. Accordingly, the relay node would override the second beam configuration in slot 4 and the first beam configuration in slot 6, i.e. would transmit or receive signals by using beam #6 in slots 4 to 6 as configured by the third beam configuration.

Accordingly, by including the overriding information in the indication for indicating a relay configuration, the base station can indicate the importance of an indicated relay configuration in a simple manner without the need of a high signaling overhead.

According to a fifth example, the priority (or priority level) of a relay configuration may be implicitly determined by the relay node from the control information, with which a corresponding relay configuration is indicated to the relay node, so that the priority (or priority level) of the corresponding relay configuration may be indicated to the relay node without generating additional signaling overhead. In other words, the relay node may determine the priority of a relay configuration. In particular, the circuitry 835 may, in operation, determine the priority of at least one of the plurality of relay configurations, according to a time of reception of control information indicating the corresponding relay configurations.

Hereby, for example the relay configuration, which is indicated by control information having a later reception time, has a higher priority than a relay configuration, which is indicated by control information having an earlier reception time. An exemplary behavior of a relay, which determines the priority of relay configuration based on a reception time of corresponding control information is illustrated in **Fig. 16**. As shown in row a) of the illustrated example, the relay node receives a first dynamic indication in slot 1, from which the relay node obtains a first beam configuration, which configures the relay node to use beam #0 in slots 2 to 4 for transmitting or receiving signals to the gNB or to a served UE. In addition, as shown in row b), the relay node receives a second dynamic indication in slot 2, from which the relay node obtains a second beam configuration, which configures the relay node to use beam #1 in slot 3 for transmitting or receiving signals to the gNB or to a served UE. Since the second dynamic indication is received at a later time resource (time interval), the relay node implicitly can determine that the second beam configuration has a higher priority than the first beam configuration. Accordingly, in slot 3 the relay node determines that the second beam configuration has the highest priority among the overlapping beam configurations, so that the relay node determines to apply beam #1, which is configured by the second beam configuration in slot 3 to the transmission or reception of signals.

By allocating the higher priority to a relay configuration, which is indicated at a later time interval, the gNB can more flexibly configure the relay node with new relay configurations. However, it may also be possible that a relay configuration, which is indicated at an earlier timing may be allocated with a higher priority, for example due to the importance of content, e.g. related to SSB signaling or other control information, which is to be transmitted or received by the earlier indicated relay configuration.

In addition or as a first alternative, the circuitry 835 may, in operation, determine the priority of at least one of the plurality of relay configurations, according to a format used for transmitting the control information. For example, the format used for transmitting the control information is a DCI format, and the relay configuration transmitted with a specific DCI format may be allocated with a specific priority. The allocation between a specific DCI format and the priority of the relay configuration indicated by using the specific DCI format may be indicated to the relay node by semi-static signaling (e.g. RRC signaling) or may be pre-configured in the relay node, for example in a firmware of the relay node.

In addition or as a second alternative, the circuitry 835 may, in operation, determine the priority of at least one of the plurality of relay configurations according to a number of frequency resources or a bandwidth used for transmitting the control information. For example, a relay configuration, which is indicated by a control information transmitted with a higher number of frequency resources or a larger bandwidth, has a higher priority than a relay configuration, which is indicated by control information transmitted with a lower number of frequency resources or a lower bandwidth. Since the higher number of frequency resources or larger bandwidth used for the transmission can enable a higher reliability of the transmitted DCI, the relay configuration, which is indicated by the more reliable indication is prioritized in this way when it overlaps with a colliding relay configuration being indicated by a less reliable indication.

In addition or as a third alternative the circuitry 835 may, in operation, determine the priority of at least one of the plurality of relay configurations according to a number of physical resource blocks, PRBs, used for transmitting the control information. For example, a relay configuration, which is indicated by control information transmitted with a higher number of PRBs, may have a higher priority than a relay configuration, which is indicated by control information transmitted with a lower number of PRBs. Since the higher number of PRBs used for the transmission can enable a higher reliability of the transmitted DCI, the relay configuration, which is indicated by the more reliable indication is preferred in this way when it overlaps with a colliding relay configuration being indicated by a less reliable indication.

In addition or as a third alternative the circuitry 835 may, in operation, determine the priority of at least one of the plurality of relay configurations according to a modulation and coding scheme, MCS, used for transmitting the control information. For example, a relay configuration, which is indicated by control information transmitted with a lower MCS, may have a higher priority than a relay configuration, which is indicated by control information transmitted with a higher MCS. Since the lower MCS used for the transmission of control information can enable a higher reliability of the transmitted DCI, the relay configuration, which is indicated by the more reliable indication is preferred in this way when it overlaps with a colliding relay configuration being indicated by a less reliable indication.

According to a sixth example, indications for a plurality of relay configurations may be received by the relay node in a same dynamic control information message and the relay node may determine a priority of overlapping relay configurations indicated by a same dynamic control information message based on an order of a position of the control information within the dynamic control information message. In particular, at least two of the overlapping relay configurations may be indicated by control information being included in a same dynamic control information message, and the circuitry 835, in operation, determines the priority of each of the plurality of the two or more relay configurations based on an order of a position of the control information within the dynamic control information message. For example, a relay configuration, which is indicated by control information having a later position within the dynamic control information message, may have a higher priority than a relay configuration, which is indicated by a control information having an earlier position within the dynamic control information message.

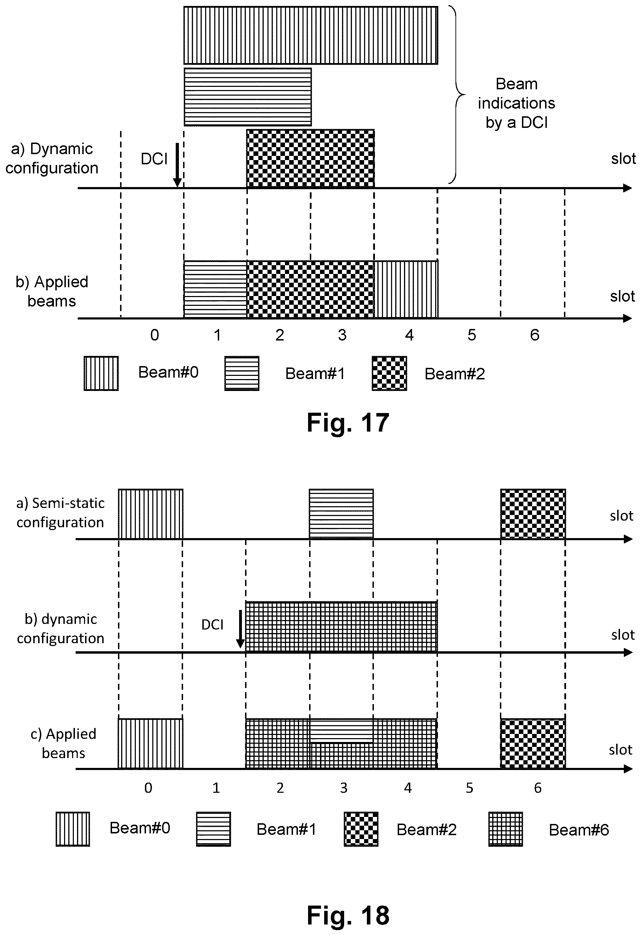

An exemplary behavior of a relay configured with a plurality of beam configurations being indicated by a same dynamic control information massage is illustrated in Fig. 17. As apparent from row a), the relay node receives a DCI as an example of a dynamic control information message at slot 0. The DCI indicates three different beam configurations, namely, at a first position, a first beam configuration, which configures the relay node to use beam #0 in slots 1 to 4, at a second position, a second beam configuration, which configures the relay node to use beam #1 in slots 1 to 2, and, at a third position, a third beam configuration, which configures the relay node to use beam #2 in slots 2 to 3. Since the third beam configuration is received at the latest position in the DCI, the relay node determines the third beam configuration to have the highest priority among the three indicated beam configurations and the second beam configuration to have the second highest priority among the three indicated beam configurations. Accordingly, the relay node determines to use beam #2 for transmitting or receiving signals in slots 2 to 3, since it is configured by the third beam configuration, which has the highest priority among the overlapping beam configurations in slots 2 to 3 (i.e. among all three beam configurations in slot 2 and among the first and third beam configuration in slot 3). Similar, the relay node determines to use beam #1 for transmitting or receiving signals in slot 1, since it is configured by the second beam configuration, which has the highest priority among the overlapping beam configurations in slot 1 (i.e. among the first and the second beam configuration in slot 1). The relay node uses beam #0 indicated by the first beam configuration, which has the lowest priority among the three indicated beam configurations, only in slot 4, where the first beam configuration does not overlap with the other indicated beam configurations.

Accordingly, a determination of the priorities in accordance with the sixth example allows the base station to indicate more than one relay configurations in a single DCI (dynamic control information message), while it is ensured that the relay node knows, which of the indicated relay configurations is applied at a certain time interval. Accordingly the efficiency of indicating relay configurations can be enhanced and signaling overhead can be reduced further.

Notably, also other positional relationships than the one described above may be applied when determining the priority of relay configurations indicated in a same dynamic control information message. For example, it may be determined that a relay configuration, which is indicated by a control information having an earlier position within the dynamic control information message, has a higher priority than a relay configuration, which is indicated by a control information having a later position within the dynamic control information message.

While so far it has been assumed for simplicity that the relay node may apply a single relay configuration at each time period, the relay node may be capable of simultaneously applying more than one relay configuration to the transmission or reception of signals. In particular, according to a seventh example, the transceiver of the relay node is capable of simultaneously applying at least two relay configurations to the signals, which are transmitted or received by the communication device, and the circuitry, in operation, determines for the time interval, to apply at least two relay configurations among the overlapping relay configurations to the signals, which are transmitted or received by the communication device, in accordance with the priorities of the overlapping relay configurations. **Fig. 18** illustrates an exemplary behavior of a relay configured with two beam configurations at a same time interval and capable of simultaneously applying two beam configurations. While, exemplarily, here one of the beam configurations is configured semi-static and the other beam configuration is configured by a dynamic indication (similar as in the example illustrated in Fig. 14), the seventh example is not limited to such a scenario, but may be applied to any overlapping beam configurations (relay configurations), regardless of being indicated by dynamical signaling, semi-static signaling or by a firmware of the relay node.

The relay is configured by a semi-static indication with a first beam configuration, shown in row a), which configures the relay node to use beam #0 at slot 0, beam #1 at slot 3 and beam #2 at slot 6 for the transmission or reception of signals. In addition, the relay receives a dynamic indication through a DCI in slot 1, from which the relay node obtains a second beam configuration, shown in row b), which configures the relay node to use beam #6 in slots 2 to 4. Accordingly, the relay node determines that the first beam configuration and the second beam configuration overlap in slot 3. In the present example, the first beam configuration and the second beam configuration are allocated with the same priority (or priority level). Since the relay node is capable of using two beam configurations simultaneously, for example two beams for two separate transmissions or receptions of signals, the relay node determines to use beam #1 configured by the first beam configuration and beam #6 configured by the second beam configuration for the reception or transmission of signals in slot 3. However, a beam indicated by a third beam configuration having a lower priority than the first beam configuration and the third beam configuration would not be applied by the relay node in slot 3.

Since the relay node may be capable of simultaneously applying more than one relay configuration, it may apply a combined relay configuration to the transmission or reception of signals, which combine two or more of the overlapping relay configurations at a time interval as outlined above. Accordingly, by determining the priorities of overlapping relay configurations, the relay node may determine, which of the overlapping relay configurations should be combined, if more relay configurations are configured for a time interval than the relay node is capable of applying in the same time interval.

In addition to the above described examples, the relay node may determine the priorities of overlapping relay configurations based on an importance of the signal, which is to be transmitted or received by each of the overlapping relay transmissions, so that it may be avoided, for example, that a relay configuration, which is to be configured for the transmission of control signals is overwritten by another relay configuration. For this purpose, the relay device may use order information, which associates a content of a signal to be transmitted or received by the relay node with a priority of the relay configuration, which is to be applied to the signal. In particular, in determining the priority of the two or more overlapping relay configurations, the circuitry 835, in operation, may obtain order information, which indicates a priority of each of the two or more relay configurations, and may determine, for the time interval, the priorities of the two or more overlapping relay configurations in accordance with the order information and a content of the signals, which are transmitted or received by the communication device and to which each of the two or more overlapping relay configurations are to be applied.

The order information may correlate the priority of a specific relay configuration with the importance of the signals, which are transmitted or received by configuring the relay node with the specific relay configuration. For instance, SSB signaling, which is transmitted through one of the interfaces of the relay node, should always be received by the relay node or be relayed by the relay node to a serving UE, so that a relay configuration, which is to be applied to the reception (or transmission) of SSB signaling should not be overridden by any configuration, which is to be applied to the reception (or transmission) of signals by the relay node in the same time interval. Meanwhile, for example a signal transmitted or received with a dynamically indicated relay configuration may be considered more important than a signal transmitted or received with a relay configuration indicated by RRC signaling and not including SSB transmissions. For example, the order information may specify the order of priority of relay configurations to be (listed from high priority to low priority):
1) Semi-statically indicated relay configurations configured for the transmission or reception of SSB signaling,
2) dynamically indicated relay configurations,
3) relay configurations configured for reception or transmission of configured grant or SPS signaling,
4) RRC based indicated relay configurations not related to the transmission or reception of SSB signaling.

If the relay node determines that two or more of such relay configurations overlap, the relay node may determine the priorities of the overlapping relay configurations based on the above list and the indication that the relay receives for indicating the relay configuration. For example, if a first indication indicates a first relay configuration configured for the transmission or reception of SSB signaling and a second indication indicates a second relay configuration configured for reception or transmission of configured grant signaling, the relay station determines, based on the above order, to apply the first relay configuration, if the two relay configurations overlap at a time interval.

The above order may be stored in a list in the relay device, and the list of order may be configured by a firmware of the communication device, and/or may be configured or altered by the gNB by dynamic signaling and/or semi-static signaling.

Furthermore, while in the foregoing description separate reception/transmission in the different links of the relay node, i.e. the Control Link, the backhaul link and the access link described with reference to Fig. 6, has been described, each of the above described examples may also be applied for a joint definition of relay configurations for the control link and the backhaul link. In particular, the circuitry 835, in operation, may determine for a time period, if the relay configuration to be applied to the transmission or reception of control signals (through the C-link), overlaps with the relay configuration to be applied to the signals to be relayed (through the access link and the backhaul link), to apply the relay configuration, which has a highest priority among the two or more overlapping relay configurations. In other words, if a first relay configuration defined for the transmission or reception of control signals through the control link overlaps in time with a second relay configuration defined for the transmission and reception of signals to be relayed through the backhaul link, the relay device determines a priority of the first relay configuration and of the second relay configuration and determines to use the one of the two overlapping relay configurations with the higher priority for the signaling over both links at the overlapping time instance.

Since the signaling of control signals through the control link may be considered more important than the signaling signaled through the backhaul link, a relay configuration, which is to be applied to the control signals (i.e. configured for the control link) may have a higher priority than a relay configuration, which is to be applied to the signals to be relayed (i.e. configured for the backhaul link).

Accordingly, for this case order information used for determining the priority of a relay configuration may specify the order of priority of relay configurations to be (listed from high priority to low priority):
1) Semi-statically indicated relay configurations configured for the transmission or reception of SSB signaling through the control link,
2) dynamically indicated relay configurations through the control link,
3) relay configurations configured for reception or transmission of configured grant or SPS signaling through the control link,
4) RRC based indicated relay configurations through the control link,
5) Semi-statically indicated relay configurations configured for the transmission or reception of SSB signaling through the backhaul link,
6) dynamically indicated relay configurations through the backhaul link,
7) relay configurations configured for reception or transmission of configured grant or SPS signaling through the backhaul link,
8) RRC based indicated relay configurations through the backhaul link.

With the above order, it can be ensured that the reception and transmission of control information is prioritized, so that it is avoided that the reception and transmission of control signals is deteriorated due to the collision or overlapping of an intended relay configuration for with another relay configuration only configured for the signaling of less important signals. Hence, by determining the priority of the relay configurations, the relay node can determine the relay configuration to be used, even when two relay configurations, which are configured for different links of the relay node overlap in a specific time interval.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a communication device is provided. The communication device includes transceiver and circuitry. The transceiver, in operation: (i) receives signals to be relayed and transmits the received signals, (ii) transmits or receives control signals, and (iii) receives relay configuration signaling. The circuitry, in operation: (i) obtains, from the relay configuration signalling, a plurality of relay configurations, wherein each relay configuration is to be applied to the signals, which are transmitted or received by the communication device, and (ii) determines, for a time interval, where two or more relay configurations overlap, to apply a relay configuration among the two or more overlapping relay configurations to the signals, which are transmitted or received by the communication device, wherein the circuitry, in operation, determines, for the time interval, to apply the relay configuration, which has a highest priority among the two or more overlapping relay configurations.

According to a second aspect provided in addition to the first aspect, at least one of the plurality of relay configurations is indicated by semi-static signalling, and at least one of the plurality of relay configurations is indicated by dynamic signalling, and the priority of the relay configuration, which is indicated by semi-static signalling is different from the priority of the relay configuration, which is indicated by dynamic signaling.

In an optional implementation of the second aspect, the priority of the relay configuration, which is indicated by semi-static signalling is higher than the priority of the relay configuration, which is indicated by dynamic signaling.

In a further optional implementation of the second aspect, the priority of the relay configuration, which is indicated by semi-static signalling is lower than the priority of the relay configuration, which is indicated by dynamic signaling.

According to a third aspect provided in addition to the first or second aspect, the priorities of the plurality of relay configurations are configured by at least one of (i) a firmware of the communication device; (ii) dynamic signalling; and/or (iii) semi-static signalling.

According to a fourth aspect provided in addition to any one of the first to third aspects, at least one of the plurality of relay configurations is indicated by dynamic signalling, and the dynamic signalling comprises priority information, which indicates the priority of the corresponding relay configuration.

According to a fifth aspect, provided in addition to any one of the first to fourth aspects, at least one of the plurality of relay configurations is indicated by dynamic signalling, and the dynamic signalling comprises overriding information, which indicates to override, for the time interval, the overlapping relay configurations.

In an optional implementation of the fifth aspect, the overriding information sets the priority of the corresponding relay configuration to the highest priority among the two or more overlapping relay configurations.

According to a sixth aspect, provided in addition to any one of the first to fifth aspects, the circuitry, in operation, determines the priority of at least one of the plurality of relay configurations, according to at least one of: (i) a time of reception of control information indicating each of the two or more overlapping relay configurations; (ii) a format used for transmitting the control information; (iii) a number of frequency resources used for transmitting the control information; (iv) a number of physical resource blocks, PRBs, used for transmitting the control information; and/or (v) a modulation and coding scheme, MCS, used for transmitting the control information.

In an optional implementation of item (i) of the sixth aspect, the relay configuration, which is indicated by the control information having a later reception time, has a higher priority than the relay configuration, which is indicated by the control information having an earlier reception time.

In an optional implementation of item (ii) of the sixth aspect, the format is a DCI format, and, in a further optional implementation of item (ii) of the sixth aspect, the priority corresponding to the format is indicated semi-statically.

In an optional implementation of item (iii) of the sixth aspect, the relay configuration, which is indicated by the control information transmitted with a higher number of frequency resources, has a higher priority than the relay configuration, which is transmitted with a lower number of frequency resources.

In an optional implementation of item (iv) of the sixth aspect, the relay configuration, which is indicated by the control information transmitted with a higher number of PRBs, has a higher priority than the relay configuration, which is transmitted with a lower number of PRBs.

In an optional implementation of item (v) of the sixth aspect the relay configuration, which is indicated by the control information transmitted with a lower MCS, has a higher priority than the relay configuration, which is transmitted with a higher MCS.

According to a seventh aspect provided in addition to any one of the first to sixth aspects, at least two of the overlapping relay configurations are indicated by control information being included in a same dynamic control information message, and the circuitry, in operation, determines the priority of each of the plurality of the two or more relay configurations based on an order of a position of the control information within the dynamic control information message.

In an optional implementation of the seventh aspect, the relay configuration, which is indicated by the control information having a later position within the dynamic control information message, has a higher priority than the relay configuration, which is indicated by the control information having an earlier position within the dynamic control information message.

In a further optional implementation of the seventh aspect, the relay configuration, which is indicated by the control information having an earlier position within the dynamic control information message, has a higher priority than the relay configuration, which is indicated by the control information having a later position within the dynamic control information message.

According to an eighth aspect provided in addition to any one of the first to seventh aspects, the transceiver is capable of simultaneously applying at least two relay configurations to the signals, which are transmitted or received by the communication device, and the circuitry, in operation, determines for the time interval, to apply at least two relay configurations among the overlapping relay configurations to the signals, which are transmitted or received by the communication device, in accordance with the priorities of the overlapping relay configurations.

In an optional implementation of the eighth aspect, the circuitry, in operation, determines, for the time interval, to apply at least two relay configurations, which have a same priority.

According to a ninth aspect provided in addition to any one of the first to eighth aspects, in determining the priority of the two or more overlapping relay configurations, the circuitry, in operation, obtains order information, which indicates a priority of each of the two or more relay configurations, and determines, for the time interval, the priorities of the two or more overlapping relay configurations in accordance with the order information and a content of the signals, which are transmitted or received by the communication device and to which each of the two or more overlapping relay configurations are to be applied.

In an optional implementation of the ninth aspect the order information is configured by at least one of: (i) a firmware of the communication device; (ii) dynamic signalling; and/or (iii) semi-static signalling.

According to a tenth aspect provided in addition to any one of the first to ninth aspects, the circuitry, in operation, determines for a time period: if the relay configuration to be applied to the control signals, overlaps with the relay configuration to be applied to the signals to be relayed, to apply the relay configuration, which has a highest priority among the two or more overlapping relay configurations.

In an optional implementation of the tenth aspect, the relay configuration to be applied to the control signals has a higher priority than the relay configuration to be applied to the signals to be relayed.

According to an eleventh aspect provided in addition to any one of the first to tenth aspects, the communication device supports a predetermined number of priority levels, and the circuitry, in operation, determines a priority of each of the two or more overlapping relay configurations according to a priority level of the overlapping relay configurations.

In an optional implementation of the eleventh aspect, the relay configuration with a small priority level has a higher priority than a relay configuration with a large priority level.

In a further optional implementation of the eleventh aspect, a relay configuration with a small priority level has a higher priority than a relay configuration with a large priority level.

According to a twelfth aspect provided in addition to the eleventh aspects, the circuitry, in operation, generates a priority level report including an indication of the predetermined number of priority levels supported by the communication device; and the transceiver, in operation, transmits the priority level report.

According to a thirteenth aspect, a scheduling device is provided. The scheduling device comprises circuitry and a transceiver. The circuitry, in operation: (i) determines a plurality of relay configurations, which are configured to be applied by a communication device to signals, which are transmitted or received by the communication device, (ii) generates a relay configuration signalling indicating each of the plurality of relay configurations, (iii) determines, for a time interval, where two or more relay configurations overlap, a priority of each of the overlapping relay configurations; and (iv) generates relay configuration signalling including an indication of the priority of each of the overlapping relay configurations. The transceiver, in operation: (i) transmits the relay configuration signalling, and (ii) receives relayed signals from the communication device and/or transmits signals to be relayed to the communication device, wherein the transceiver, in operation, receives, for the time interval, signals, to which the relay configuration is applied by the communication device having a highest priority among the two or more overlapping relay configurations.

The scheduling device of the thirteenth aspect may further implement the corresponding features of any of the second to twelfth aspect.

According to a fourteenth aspect, a method for a communication device is provided. The method includes the steps of: (i) receiving relay configuration signalling; (ii) obtaining, from the relay configuration signalling, a plurality of relay configurations, wherein each relay configuration is to be applied to signals, which are transmitted or received by the communication device; (iii) determining, for a time interval, where two or more relay configurations overlap, to apply a relay configuration among the two or more overlapping relay configurations to the signals, which are to be transmitted or received by the communication device, wherein, for the time interval, the relay configuration, which has a highest priority among the two or more overlapping relay configurations is applied; and (iv) receiving signals to be relayed and transmitting the received signals and/or transmitting or receiving control signals by applying the determined relay configuration.

Further aspects are provided for the method according to the fourteenth aspect, corresponding to the steps performed in operation by the communication device, provided by any of the second to thirteenth aspects.

According to a fifteenth aspect, a method for a scheduling device is provided. The method includes the steps of: (i) determining a plurality of relay configurations, which are configured to be applied by a communication device to signals, which are transmitted or received by the communication device; (ii) determining, for a time interval, where two or more relay configurations overlap, a priority of each of the overlapping relay configurations; (iii) generating a relay configuration signalling indicating each of the plurality of relay configurations and including an indication of the priority of each of the overlapping relay configurations; (iv) transmitting the relay configuration signalling, and (v) receiving relayed signals or control signals from the communication device, to which the plurality of relay configurations is applied; and (vi) receiving for the time interval, relayed signals or control signals from the communication device, to which a relay configuration is applied having a highest priority among the two or more overlapping relay configurations.

According to a sixteenth aspect, an integrated circuit is provided (that may be deployed in a communication system, in particular a relay node). The integrated circuit, in operation, controls a process of a communication device, the process including the steps of: (i) receiving relay configuration signalling; (ii) obtaining, from the relay configuration signalling, a plurality of relay configurations, wherein each relay configuration is to be applied to signals, which are transmitted or received by the communication device; (iii) determining, for a time interval, where two or more relay configurations overlap, to apply a relay configuration among the two or more overlapping relay configurations to the signals, which are to be transmitted or received by the communication device, wherein, for the time interval, the relay configuration, which has a highest priority among the two or more overlapping relay configurations is applied; and (iv) receiving signals to be relayed and transmitting the received signals and/or transmitting or receiving control signals by applying the determined relay configuration.

For instance, the integrated circuit according to the sixteenth aspect may comprise: an interface to a transceiver capable of receiving and transmitting signals; and circuitry configured (by hardware or software) to perform: (i) configuring, via said interface, the transceiver to receive relay configuration signalling; (ii) obtaining, from the relay configuration signalling, a plurality of relay configurations, wherein each relay configuration is to be applied to signals, which are transmitted or received by the communication device; (iii) determining, for a time interval, where two or more relay configurations overlap, to apply a relay configuration among the two or more overlapping relay configurations to the signals, which are to be transmitted or received by the communication device, wherein, for the time interval, the relay configuration, which has a highest priority among the two or more overlapping relay configurations is applied; and (iv) configuring, via said interface, the transceiver to relay, in the validity period, signals in accordance with the other relay configuration; and (viii) configuring, via said interface, the transceiver to receive signals to be relayed and transmit the received signals and/or transmit or receive control signals by applying the determined relay configuration.

The integrated circuit of the sixteenth aspect may further implement the corresponding features of any of the second to twelfth aspect.

According to a seventeenth aspect, an integrated circuit is provided (that may be deployed in a communication, in particular a scheduling device). The integrated circuit, in operation, controls a process of a scheduling device, the process including the steps of: (i) determining a plurality of relay configurations, which are configured to be applied by a communication device to signals, which are transmitted or received by the communication device; (ii) determining, for a time interval, where two or more relay configurations overlap, a priority of each of the overlapping relay configurations; (iii) generating a relay configuration signalling indicating each of the plurality of relay configurations and including an indication of the priority of each of the overlapping relay configurations; (iv) transmitting the relay configuration signalling, and (v) receiving relayed signals or control signals from the communication device, to which the plurality of relay configurations is applied; and (vi) receiving for the time interval, relayed signals or control signals from the communication device, to which a relay configuration is applied having a highest priority among the two or more overlapping relay configurations.

For instance, the integrated circuit according to the seventeenth aspect may comprise: an interface to a transceiver capable of receiving and transmitting signals; and circuitry configured (by hardware or software) to perform: : (i) determining a plurality of relay configurations, which are configured to be applied by a communication device to signals, which are transmitted or received by the communication device; (ii) determining, for a time interval, where two or more relay configurations overlap, a priority of each of the overlapping relay configurations; (iii) generating a relay configuration signalling indicating each of the plurality of relay configurations and including an indication of the priority of each of the overlapping relay configurations; (iv) configuring, via said interface, the transceiver to transmit the relay configuration signalling, (v) configuring, via said interface, the transceiver to receive relayed signals or control signals from the communication device, to which the plurality of relay configurations is applied, and (vi) configuring, via said interface, the transceiver to receive for the time interval, relayed signals or control signals from the communication device, to which a relay configuration is applied having a highest priority among the two or more overlapping relay configurations.

The integrated circuit of the seventeenth aspect may further implement the corresponding features of any of the second to twelfth aspect.

According to an eighteenth aspect, a program stored on a (non-transitory) storage medium and including code instructions, which, when executed on one or more processors of a user equipment, cause the one or more processors to execute the steps of any of the above mentioned methods (the fourteenth and the fifteenth aspects and their respective further aspects).

## Claims

1. A communication device comprising:
a transceiver which, in operation:
- receives signals to be relayed and transmits the received signals,
- transmits or receives control signals, and
- receives relay configuration signalling; and
circuitry which, in operation:
- obtains, from the relay configuration signalling, a plurality of relay configurations, wherein each relay configuration is to be applied to the signals, which are transmitted or received by the communication device;
- determines, for a time interval, where two or more relay configurations overlap, to apply a relay configuration among the two or more overlapping relay configurations to the signals, which are transmitted or received by the communication device,
- wherein the circuitry, in operation, determines, for the time interval, to apply the relay configuration, which has a highest priority among the two or more overlapping relay configurations.

2. The communication device according to claim 1, wherein
at least one of the plurality of relay configurations is indicated by semi-static signalling, and at least one of the plurality of relay configurations is indicated by dynamic signalling, and
the priority of the relay configuration, which is indicated by semi-static signalling is different from the priority of the relay configuration, which is indicated by dynamic signaling,
optionally wherein the priority of the relay configuration, which is indicated by semi-static signalling is higher than the priority of the relay configuration, which is indicated by dynamic signaling, or
optionally wherein the priority of the relay configuration, which is indicated by semi-static signalling is lower than the priority of the relay configuration, which is indicated by dynamic signaling.

3. The communication device according to any one of claims 1 or 2, wherein,
the priorities of the plurality of relay configurations are configured by at least one of:
- a firmware of the communication device;
- dynamic signalling; and/or
- semi-static signalling.

4. The communication device according to any one of claims 1 to 3, wherein
at least one of the plurality of relay configurations is indicated by dynamic signalling, and
the dynamic signalling comprises priority information, which indicates the priority of the corresponding relay configuration.

5. The communication device according to any one of claims 1 to 4, wherein
at least one of the plurality of relay configurations is indicated by dynamic signalling, and
the dynamic signalling comprises overriding information, which indicates to override, for the time interval, the overlapping relay configurations,
optionally, wherein the overriding information sets the priority of the corresponding relay configuration to the highest priority among the two or more overlapping relay configurations.

6. The communication device according to any one of claims 1 to 5, wherein
the circuitry, in operation, determines the priority of at least one of the plurality of relay configurations, according to at least one of:
- a time of reception of control information indicating each of the two or more overlapping relay configurations, optionally wherein the relay configuration, which is indicated by the control information having a later reception time, has a higher priority than the relay configuration, which is indicated by the control information having an earlier reception time;
- a format used for transmitting the control information, optionally wherein the format is a DCI format, and optionally wherein the priority corresponding to the format is indicated semi-statically;
- a number of frequency resources used for transmitting the control information, optionally wherein the relay configuration, which is indicated by the control information transmitted with a higher number of frequency resources, has a higher priority than the relay configuration, which is transmitted with a lower number of frequency resources;
- a number of physical resource blocks, PRBs, used for transmitting the control information, optionally wherein the relay configuration, which is indicated by the control information transmitted with a higher number of PRBs, has a higher priority than the relay configuration, which is transmitted with a lower number of PRBs; and/or
- a modulation and coding scheme, MCS, used for transmitting the control information, optionally, wherein the relay configuration, which is indicated by the control information transmitted with a lower MCS, has a higher priority than the relay configuration, which is transmitted with a higher MCS.

7. The communication device according to any one of claims 1 to 6, wherein
at least two of the overlapping relay configurations are indicated by control information being included in a same dynamic control information message, and
the circuitry, in operation, determines the priority of each of the plurality of the two or more relay configurations based on an order of a position of the control information within the dynamic control information message, and
optionally, wherein the relay configuration, which is indicated by the control information having a later position within the dynamic control information message, has a higher priority than the relay configuration, which is indicated by the control information having an earlier position within the dynamic control information message, and
optionally, wherein the relay configuration, which is indicated by the control information having an earlier position within the dynamic control information message, has a higher priority than the relay configuration, which is indicated by the control information having a later position within the dynamic control information message.

8. The communication device according to any one of claims 1 to 7, wherein
the transceiver is capable of simultaneously applying at least two relay configurations to the signals, which are transmitted or received by the communication device,
and the circuitry, in operation, determines for the time interval, to apply at least two relay configurations among the overlapping relay configurations to the signals, which are transmitted or received by the communication device, in accordance with the priorities of the overlapping relay configurations,
optionally, wherein the circuitry, in operation, determines, for the time interval, to apply at least two relay configurations, which have a same priority.

9. The communication device according to any one of claims 1 to 8, wherein
in determining the priority of the two or more overlapping relay configurations, the circuitry, in operation,
- obtains order information, which indicates a priority of each of the two or more relay configurations, and
- determines, for the time interval, the priorities of the two or more overlapping relay configurations in accordance with the order information and a content of the signals, which are transmitted or received by the communication device and to which each of the two or more overlapping relay configurations are to be applied,
optionally, wherein the order information is configured by at least one of:
- a firmware of the communication device;
- dynamic signalling; and/or
- semi-static signalling.

10. The communication device according to any one of claims 1 to 9, wherein
the circuitry, in operation, determines for a time period:
if the relay configuration to be applied to the control signals, overlaps with the relay configuration to be applied to the signals to be relayed, to apply the relay configuration, which has a highest priority among the two or more overlapping relay configurations,
optionally wherein the relay configuration to be applied to the control signals has a higher priority than the relay configuration to be applied to the signals to be relayed .

11. The communication device according to any one of claims 1 to 10, wherein the communication device supports a predetermined number of priority levels, and wherein the circuitry, in operation, determines a priority of each of the two or more overlapping relay configurations according to a priority level of the overlapping relay configurations,
optionally, wherein the relay configuration with a small priority level has a higher priority than a relay configuration with a large priority level, or
optionally, wherein a relay configuration with a small priority level has a higher priority than a relay configuration with a large priority level.

12. The communication device according to claim 11, wherein
the circuitry, in operation, generates a priority level report including an indication of the predetermined number of priority levels supported by the communication device; and
the transceiver, in operation, transmits the priority level report.

13. A scheduling device comprising:
circuitry which, in operation:
- determines a plurality of relay configurations, which are configured to be applied by a communication device to signals, which are transmitted or received by the communication device,
- generates a relay configuration signalling indicating each of the plurality of relay configurations,
- determines, for a time interval, where two or more relay configurations overlap, a priority of each of the overlapping relay configurations,
- generates relay configuration signalling including an indication of the priority of each of the overlapping relay configurations; and
a transceiver which, in operation:
- transmits the relay configuration signalling, and
- receives relayed signals from the communication device and/or transmits signals to be relayed to the communication device,
- wherein the transceiver, in operation, receives, for the time interval, signals, to which the relay configuration is applied by the communication device having a highest priority among the two or more overlapping relay configurations.

14. A method for a communication device, the method including the steps of:
receiving relay configuration signalling;
obtaining, from the relay configuration signalling, a plurality of relay configurations, wherein each relay configuration is to be applied to signals, which are transmitted or received by the communication device;
determining, for a time interval, where two or more relay configurations overlap, to apply a relay configuration among the two or more overlapping relay configurations to the signals, which are to be transmitted or received by the communication device, wherein, for the time interval, the relay configuration, which has a highest priority among the two or more overlapping relay configurations is applied;
receiving signals to be relayed and transmitting the received signals and/or transmitting or receiving control signals by applying the determined relay configuration.

15. A method for a scheduling device, the method including the steps of:
determining a plurality of relay configurations, which are configured to be applied by a communication device to signals, which are transmitted or received by the communication device;
determining, for a time interval, where two or more relay configurations overlap, a priority of each of the overlapping relay configurations;
generating a relay configuration signalling indicating each of the plurality of relay configurations and including an indication of the priority of each of the overlapping relay configurations;
transmitting the relay configuration signalling, and
receiving relayed signals or control signals from the communication device, to which the plurality of relay configurations is applied; and
receiving, for the time interval, relayed signals or control signals from the communication device, to which a relay configuration is applied having a highest priority among the two or more overlapping relay configurations.
